(19) Europäisches Patentamt
European Patent Office
Office européen des brevets

(11) Veröffentlichungsnummer: **0 240 774 B1**

## (12) EUROPÄISCHE PATENTSCHRIFT

(45) Veröffentlichungstag der Patentschrift: **11.09.91**

(51) Int. Cl.5: **F25B 9/02**, G01J 5/06

(21) Anmeldenummer: **87103743.8**

(22) Anmeldetag: **14.03.87**

(54) **Vorrichtung zum Kühlen eines Detektors, insbesondere bei einem optischen Sucher.**

(30) Priorität: **04.04.86 DE 3611206**

(43) Veröffentlichungstag der Anmeldung:
**14.10.87 Patentblatt 87/42**

(45) Bekanntmachung des Hinweises auf die
Patenterteilung:
**11.09.91 Patentblatt 91/37**

(84) Benannte Vertragsstaaten:
**DE FR GB IT SE**

(56) Entgegenhaltungen:
EP-A- 0 093 253          EP-A- 0 239 375
DE-A- 3 106 469          DE-U- 8 405 789
US-A- 3 413 819          US-A- 4 080 802

BERICHTE AUS TECHNIK UND WISSEN-
SCHAFT, Nr. 57, Seiten 48-51, Wiesbaden,
DE; W. ROHDE: "20 Jahre Erfahrung mit Molekularsieben im Luftzerlegungsanlagenbau"

(73) Patentinhaber: **Bodenseewerk Gerätetechnik
GmbH
Alte Nussdorfer Strasse 15 Postfach 1120
W-7770 Überlingen/Bodensee(DE)**

(72) Erfinder: **Hingst, Uwe, Dr.
Rebenstrasse 18
W-7991 Oberteuringen(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)**

EP 0 240 774 B1

## Beschreibung

Die Erfindung betrifft eine Vorrichtung zum Kühlen eines Detektors, insbesondere bei einem optischen Sucher, mittels des Joule-Thomson-Effektes durch Expansion von unter Druck stehendem Gas.

Es ist bekannt, Detektoren für optische Sucher bei zielsuchenden Flugkörpern unter Ausnutzung des Joule-Thomson-Effektes zu kühlen. Dadurch wird das Signal-zu-Rausch Verhältnis des Detektors insbesondere im infraroten Bereich entscheidend verbessert. Das zu entspannende, unter Druck stehende Gas wird dabei einer Gasflasche entnommen. Da es nicht nur erforderlich ist, den Detektor im Zeitpunkt des Abschlusses und während der Zielverfolgung so zu kühlen sondern der Detektor während der gesamten Mission des Flugkörperträgers gekühlt gehalten werden muss, ist der Gasverbrauch recht hoch. Die Gasflaschen müssen deshalb regelmässig ersetzt werden. Wird dies vergessen, dann kann der Sucher zu einem kritischen Zeitpunkt dadurch funktionsunfähig werden, dass der Gasvorrat zu Ende geht und die Kühlung des Detektors wegfällt.

Es ist daher schon vorgeschlagen worden, als für den Joule-Thomson-Effekt zu entspannendes Druckgas Druckluft zu verwenden, die mittels eines Kompressors angesaugt und komprimiert wird. Diese Druckluft wird über eine Druckgasleitung zum Detektor geleitet und dort unter Abkühlung entspannt. Durch Wärmeaustausch in einem Gegenstromverfahren erfolgt dabei eine Vorkühlung der zu entspannenden Druckluft, so dass dabei ausserordentlich tiefe Temperaturen erreicht werden.

Ein Austausch von Gasflaschen kann dann entfallen. Es ergibt sich jedoch ein anderes Problem: Das Gas in den Gasflaschen ist rein. Die angesaugte Luft enthält jedoch gasförmige Bestandteile, die bei vergleichsweise hohen Temperaturen kondensieren oder gefrieren, beispielsweise Wasserdampf oder Kohlendioxid. Solche Bestandteile der Luft würden im Bereich des gekühlten Detektors kondensieren oder gefrieren und dadurch das Kühlsystem in kurzer Zeit funktionsunfähig machen, beispielsweise durch Verstopfen der Druckgasleitung oder der Austrittdüse, über welche die Entspannung der Druckluft stattfindet.

Es ist daher erforderlich, die störenden Bestandteile vorher aus der Druckluft zu entfernen. Zu diesem Zweck ist vorgeschlagen worden, dem Kompressor ein Molekularfilter nachzuschalten, welches die störenden Bestandteile des Gases adsorbiert. Ein solches Filter wird jedoch nach einer bestimmten Zeit, die von seiner Oberfläche und damit von seiner Grösse abhängt, gesättigt. Um ein solches Molekularfilter über einen längeren Zeitraum betriebsbereit zu halten, muss das Molekularfilter daher ziemlich gross sein. Das ist nachteilig. Bei kleinen Molekularfiltern ist ein häufiger Wechsel erforderlich.

Damit ist im Grunde das Problem nur verschoben worden: Statt eines Wechsels der Gasflasche ist nun ein Wechsel des Molekularfilters erforderlich. Ein Versäumnis in dieser Hinsicht kann ebenfalls zur Funktionsunfähigkeit des Suchers zur Unzeit führen. Wenn das Molekularfilter gesättigt ist, adsorbiert es die störenden Bestandteile nicht mehr. Diese können sich dann wie beschrieben im Bereich des gekühlten Detektors niederschlagen und gefrieren.

Durch die EP-A-0 239 375 (Stand der Technik nach Artikel 54 (3) EPÜ) ist eine Vorrichtung zum Kühlen eines Detektors mittels des Joule-Thomson-Effektes durch Expansion von unter Druck stehendem Gas bekannt, bei welchem in einer Druckgasleitung ein Kompressor zum Ansaugen und Komprimieren des Gases angeordnet ist. Mit der Druckgasleitung ist eine den Joule-Thomson-Effekt ausnutzende Kühlvorrichtung für den Detektor verbunden. Die Kühlvorrichtung enthält eine Entspannungsdüse und einen Wärmetauscher, in welchem das Druckgas aus der Druckgasleitung im Gegenstrom von dem entspannten Gas vorgekühlt wird. Dem Kompressor ist ein Molekularfilter zum Adsorbieren von störenden Bestandteilen des Gases nachgeschaltet. Bei der EP-A-0 239 375 erfolgt eine Rückspülung des Molekularfilters über den Kompressor, indem über ein 2/4-Wegeventil Einlass und Auslass des Kompressors überkreuz mit dem Molekularfilter und der Atmosphäre verbindbar sind. Es wird so zum Rückspülen Luft aus dem Molekularfilter angesaugt und in die Atmosphäre abgegeben.

Die US-A-3 413 819 betrifft einen Joule-Thomson-Kühler mit einem temperaturabhängig verstellbaren Ventil. Die Verstellung des Ventils erfolgt über einen mit einem Speichervolumen verbundenen Balg. Balg und Speichervolumen sind dabei ein geschlossenes System, das mit einem bei der Solltemperatur kondensierenden Gas gefüllt ist.

Der Erfindung liegt die Aufgabe zugrunde, eine Vorrichtung der eingangs genannten Art so auszubilden, dass die Notwendigkeit des Austauschs von Teilen entfällt.

Eine weitere, speziellere Aufgabe der Erfindung besteht darin, die Verwendung eines möglichst kleinen Molekularfilters zu ermöglichen.

Erfindungsgemäss wird diese Aufgabe dadurch gelöst, dass

(a) ein Kompressor zum Ansaugen und Komprimieren des Gases in einer zu dem Detektor führenden Druckgasleitung angeordnet ist,

(b) mit der Druckgasleitung eine den Joule-Thomson-Effekt ausnutzende Kühlvorrichtung für

2

den Detektor mit einer Entspannungsdüse und einem Wärmetauscher verbunden ist, in welchem das Druckgas aus der Druckgasleitung im Gegenstrom von dem entspannten Gas vorgekühlt wird, und

(c) dem Kompressor ein Molekularfilter zum Adsorbieren von störenden Bestandteilen des Gases nachgeschaltet ist,

(d) zwischen Molekularfilter und Kühlvorrichtung ein erstes gesteuertes Ventil angeordnet ist,

(e) mit der Druckgasleitung stromab von dem Molekularfilter und stromauf von dem ersten gesteuerten Ventil ein Speicherbehälter verbunden ist,

(f) die Druckgasleitung zwischen Kompressor und Molekularfilter über ein zweites gesteuertes Ventil mit einem Auslass verbindbar ist,

(g) temperatursteuernde Mittel zur Veränderung der Temperatur des Molekularfilters zwischen einem relativ niedrigen und einem relativ hohen Wert vorgesehen sind,

(h) eine Steuervorrichtung vorgesehen ist, durch welche

- in einem ersten Zustand das erste gesteuerte Ventil auf- und das zweite gesteuerte Ventil zusteuerbar ist und die temperatursteuernden Mittel auf die relativ niedrige Temperatur umschaltbar sind und

- in einem zweiten Zustand das erste gesteuerte Ventil zu- und das zweite gesteuerte Ventil aufsteuerbar ist und die temperatursteuernden Mittel auf die relativ hohe Temperatur umschaltbar sind, und

(i) die Steuervorrichtung normalerweise in dem ersten Zustand ist und in Zeitabständen in den zweiten Zustand schaltet.

Während des normalen Betriebs wird der Speicherbehälter "aufgeladen", d.h. mit Druckgas unter dem stromab von dem Molekularfilter herrschenden Druck gefüllt. In bestimmten zeitlichen Abständen, welche durch die Steuervorrichtung bestimmt sind, wird dann die Druckgasleitung stromab im Anschluss des Speicherbehälters abgesperrt und gleichzeitig ein Auslass stromauf von dem Molekularfilter geöffnet. Es strömt jetzt Gas aus dem Speicherbehälter rückwärts durch das Molekularfilter zum Auslass. Während die Adsorption am Molekularfilter bei einer relativ zu der Rückspültemperatur niedrigen Temperatur und hohem Druck, nämlich dem Ausgangsdruck des Kompressors, erfolgt, wird beim Rückspülen mit einer relativ zu der normalen Arbeitstemperatur hohen Temperatur des Molekularfilters und einem niedrigen Druck, nämlich dem Auslassdruck gearbeitet. Die niedrige Temperatur und der hohe Druck begünstigen die Adsorption. Die hohe Temperatur und der niedrige Druck begünstigen das Austreiben der adsorbierten Bestandteile während des Rückspülens. Infolgedessen reicht die in dem Speicherbehälter gespeicherte Gasmenge aus, um das Molekularfilter von den adsorbierten Bestandteilen wieder zu befreien und für den normalen Kühlbetrieb funktionsfähig zu machen. Diese Anordnung ist für den Dauerbetrieb geeignet. Es ist kein regelmässiger Austausch von Gasflaschen oder Molekularfiltern erforderlich wie bei den früheren Vorschlägen. Das Molekularfilter kann raumsparend ausgebildet werden, da es regeneriert wird, bevor eine Sättigung eintritt.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

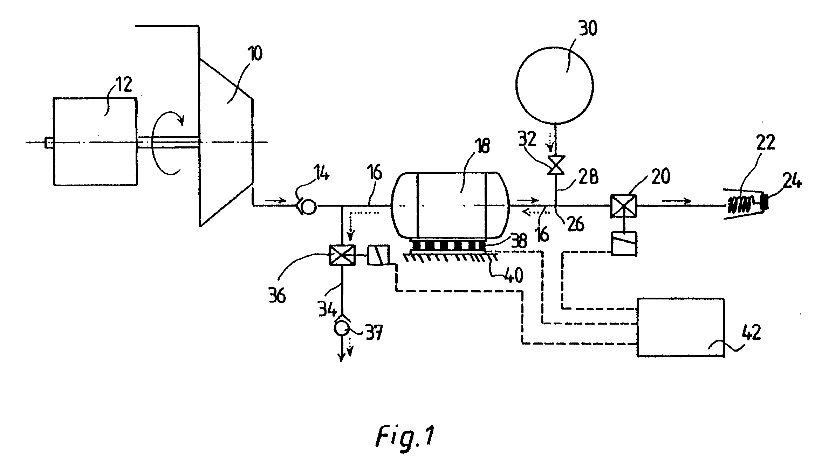

Fig. 1 ist ein schematisches Schaltbild einer Vorrichtung zum Kühlen eines Detektors.

Fig. 2 zeigt einen Längsschnitt des Molekularfilters mit den temperatursteuernden Mitteln in Form von Peltier-Elementen und der Druckgasleitung.

Fig. 3 zeigt im Prinzip die Abhängigkeit der Adsortion vom Druck für verschiedene Temperaturen.

Fig. 4 zeigt im Prinzip die Abhängigkeit der Desorptionsrate vom Druck für verschiedene Temperaturen.

Ein Kompressor 10 wird von einem Motor 12 angetrieben. Der Kompressor 10 liefert einen Ausgangsdruck, der über ein Rückschlagventil 14 in einer Druckgasleitung 16 wirksam wird. Dem Kompressor 10 ist in der Druckgasleitung 16 ein Molekularfilter 18 nachgeschaltet. Das Molekularfilter 18 kann beispielsweise Aktivkohle enthalten. Ein Gramm Aktivkohle hat eine Oberfläche von etwa 500 $m^2$. Die Druckgasleitung führt dann über ein gesteuertes Ventil 20 zu einer Kühlvorrichtung 22 für einen Detektor 24. Die Kühlvorrichtung 22 nutzt den Joule-Thomson-Effekt aus. Das Druckgas wird über eine Düse entspannt und kühlt sich dabei ab. Das entspannte und abgekühlte Gas strömt über einen in der Druckgasleitung 16 sitzenden Wärmetauscher, so daß das zuströmende Druckgas vorgekühlt wird. Die Kühlvorrichtung 22 ist an sich bekannt und daher hier nicht im einzelnen dargestellt und beschrieben. Es wird damit eine sehr starke Abkühlung des Detektors 24 erreicht. Bei den dabei auftretenden niedrigen Temperaturen können bestimmte Bestandteile der angesaugten Luft ausfrieren und damit die Kühlvorrichtung 22 funktionsunfähig machen. Um das zu vermeiden, werden solche Bestandteile durch das Molekularfilter 18 entfernt.

Stromab von dem Molekularfilter 18 zweigt an einem Anschluß 26 von der Druckgasleitung 16 eine Zweigleitung 28 ab. Die Zweigleitung 28 führt zu einem Speicherbehälter 30. In der Zweigleitung ist eine einstellbare Drossel 32 angeordnet. Stromauf von dem Molekularfilter 18 zwischen dem Molekularfilter 18 und dem Rückschlagventil 14 zweigt von der Druckgasleitung 16 eine Zweigleitung 34 ab. Die Zweigleitung 34 enthält ein gesteuertes Ventil 36 und ist über ein in Auslaßrichtung öffnendes Rückschlagventil 37 mit einem Auslaß verbunden.

Das Molekularfilter 18 ist über temperatursteuernde Mittel in Form von Peltier-Elementen 38 mit einem Wärmespeicher 40, d.h. einer Masse mit ziemlich großer Wärmekapazität, verbunden. Als Wärmespeicher 40 dienen vorzugsweise die Gehäuse des Kompressors 10 und des Motors 12 (oder eines von diesen).

Die gesteuerten Ventile 20 und 36 sowie die Peltier-Elemente 38 werden von einer Steuervorrichtung 42 gesteuert. Durch die Steuervorrichtung 42 ist in einem ersten Zustand das gesteuerte Ventil 36 zusteuerbar, das gesteuerte Ventil 20 aufsteuerbar und sind die temperatursteuernden Mittel auf die relativ niedrige Temperatur umschaltbar, d.h. sind die Peltier-Elemente 38 so stromdurchflossen, daß sie dem Molekularfilter 18 Wärme entziehen und dem Wärmespeicher 40 zuführen. Das ist der normale Betrieb der Vorrichtung, bei welchem die Kühlvorrichtung 22 in Betrieb ist und das Molekularfilter 18 auf niedriger Temperatur gehalten wird, um möglichst viel von den zu eliminierenden Bestandteilen des Druckgases zu adsorbieren. In einem zweiten Zustand ist das gesteuerte Ventil 36 aufsteuerbar das gesteuerte Ventil 20 zusteuerbar und die sind die temperatursteuernden Mittel auf eine relativ hohe Temperatur umschaltbar. Die Peltier-Elemente 38 werden dann so von Strom durchflossen, daß das Molekularfilter 18 aufgeheizt wird.

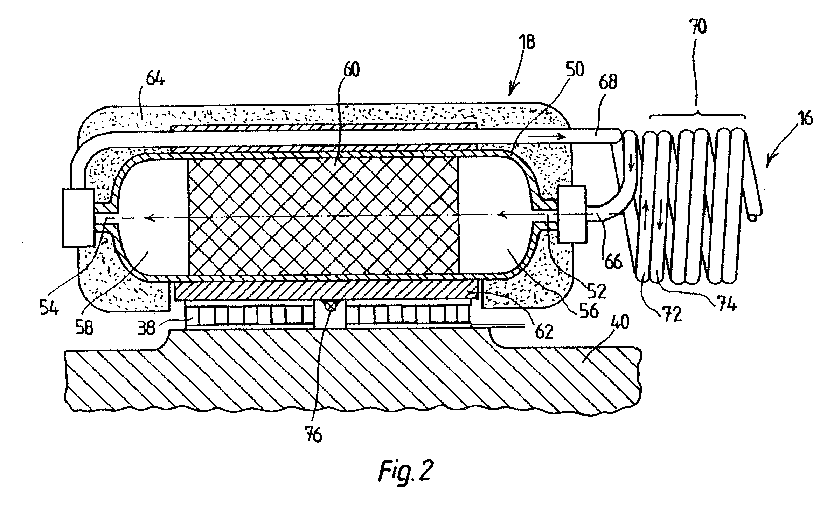

In Fig. 2 ist der konstruktive Aufbau des Molekularfilters 18 dargestellt. Das Molekularfilter 18 enthält ein langgestrecktes Gehäuse 50 mit einem Einlaß 52 an einem Ende und einem Auslaß 54 am anderen Ende. An dem besagten einen Ende ist eine Einlaßkammer 56 gebildet, in welche der Einlaß 52 mündet. An dem besagten anderen Ende ist eine Auslaßkammer 58 gebildet, von welcher der Auslaß abgeht. Zwischen Einlaßkammer 56 und Auslaßkammer 58 ist in dem Gehäuse 50 ein Filtereinsatz 60 angeordnet, der beispielsweise aus Aktivkohle besteht. Das Gehäuse 50 sitzt in einem Haltemantel 62, der eine gute Wärmeleitung und -verteilung gewährleistet. Der Haltemantel 62 sitzt über die Peltier-Elemente 38 auf dem als Wärmespeicher 40 dienenden Gehäuse des Kompressors 10. Außerhalb des Bereiches der Peltier-Elemente 32 sind das Gehäuse 50 und der Haltemantel 62 von einem wärmeisolierenden Mantel 64 umgeben.

Die Druckleitung 16 ist mit einem kompressorseitigen Abschnitt 66 mit dem Einlaß 52 und mit einem zu der Kühlvorrichtung 22 führenden Abschnitt 68 mit dem Auslaß 54 verbunden. Der Abschnitt 68 ist durch den isolierenden Mantel 64 und den Haltemantel 62 hindurch zur Einlaßseite geführt. Durch einen Gegenstrom-Wärmetauscher 70 steht das dem Molekularfilter 18 über Abschnitt 66 zuströmende Gas mit dem aus dem Molekularfilter 18 über Abschnitt 68 abströmenden Gas in Wärmeaustausch. Der Gegenstrom-Wärmetauscher 70 weist Rohre 72 für das zuströmende Gas auf, die einen Teil des Abschnitts 66 der Druckleitung 16 bilden, und Rohre 74 für das abströmende Gas, die einen Teil des Abschnitts 68 der Druckleitung 16 bilden. Die Rohre 72 und 74 stehen in engem wärmeleitenden Kontakt miteinander und sind zusammen schraubenförmig gewendelt. Die schraubenförmig gewendelten Rohre 72 und 74 wirken wie eine Wendelfeder und sind somit in axialer Richtung federnd. Dadurch wird das Molekularfilter 18 von axialen Kräften, die über die Druckgasleitung 16 wirksam werden könnten, weitgehend entlastet. Es wird auf diese Weise möglich, daß das Molekularfilter 18, wie dargestellt, nur über die Petier-Elemente 32 auf dem Wärmespeicher 40 abgestützt ist. Auf diese Weise wird die Isolation des Molekularfilters 18 verbessert und es wird ein unkontrollierter Wärmeabfluß oder - zufluß über zusätzliche Halterungselemente vermieden.

An dem Molekularfilter 18 ist ein Temperaturfühler 76 angebracht. Der Temperaturfühler 76 schaltet ein Temperatursignal auf die Steuervorrichtung 42 auf. Es kann dann eine Temperaturregelung erfolgen, indem die Steuervorrichtung 42 einen Regler enthält, durch welchen die Temperatur des Molekularfilters 18 mittels der temperatursteuernden Mittel, d.h. der Peltier-Elemente 32, in dem ersten Zustand auf die relativ niedrige Temperatur und in dem zweiten Zustand auf die relativ hohe Temperatur regelbar ist. Es wird dann bei Adsorption und Desorption bei definierten, geregelten Temperaturen gearbeitet.

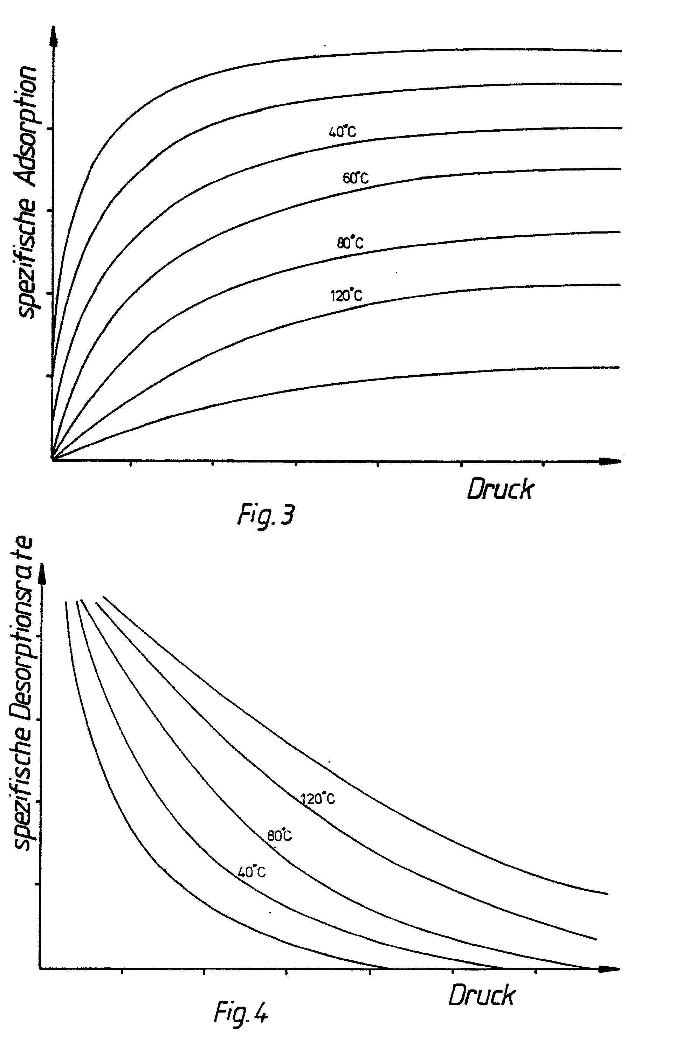

Die beschriebene Vorrichtung arbeitet wie folgt: Durch den Kompressor 10 wird Druckgas (Druckluft) über die Druckgasleitung 16 auf die Kühlvorrichtung 22 gegeben und damit der Detektor 24 stark gekühlt. Durch das Molekularfilter 18 werden unerwünschte Bestandteile dieses Druckgases durch Adsorption herausgefiltert. Wie aus Fig. 3 ersichtlich ist, kann eine bestimmte Menge von Filtermaterial wie Aktivkohle bis zur Sättigung umso mehr an solchen Bestandteilen aufnehmen, je höher der Druck und je niedriger die Temperatur ist. Deshalb wird bei der normalen Betriebsweise das Molekularfilter 18 durch die Peltier-Elemente 38 gekühlt. Der Druck ist der Ausgangsdruck des Kompressors 10 und daher relativ hoch. Beides ist günstig für die Adsorption. Der Effekt wird noch dadurch verbessert und der Übergang zu der niedrigen Temperatur wird dadurch beschleunigt, daß das dem Molekularfilter 18 zugeführte Druckgas in dem Gegenstrom- Wärmetauscher 70 durch das aus diesem abströmende Druckgas vorgekühlt wird.

Gleichzeitig wird über die Zweigleitung 28 und die Drossel 32 der Speicherbehälter 30, "aufgeladen", d.h. mit Druckgas unter dem vom Kompressor 10 gelieferten, in der Druckgasleitung herrschenden Druck gefüllt.

Wenn schließlich sich das Molekularfilter 18 trotzdem dem Zustand der Sättigung nähert, wird von der Steuervorrichtung die Regeneration des Molekularfilters 18 eingeleitet. Das kann in fest vorgegebenen, aus Erfahrungswerten resultierenden Zeitabständen geschehen. Die Steuervorrichtung 42 geht dann in den zweiten Zustand über. Das gesteuerte Ventil 20 wird geschlossen, das gesteuerte Ventil 36 wird geöffnet und der Kompressor 10 wird abgeschaltet. Gleichzeitig wird das Molekularfilter 18 durch die Peltier-Elemente 38 beheizt.

Dadurch fließt eine Strömung von Druckgas aus dem Speicherbehälter 30 über die Drossel 32 in umgekehrter Richtung durch das Molekularfilter 18 und über die Zweigleitung 34 zum Auslaß. Die Strömungsrate kann durch die Drossel 32 geeignet gewählt werden. Durch diese Strömung erfolgt eine Desorption der in dem Molekularfilter 18 adsorbierten Gasbestandteile, die dann zum Auslaß geführt werden. Wie aus Fig. 4 ersichtlich ist, ist die Desorptionsrate, d.h. die Menge des von einer bestimmten Strömung pro Zeiteinheit desorbierten Gases, umso höher, je höher die Temperatur und je niedriger der Druck ist. Gerade diese Bedingungen werden in dem zweiten Zustand der Steuervorrichtung erfüllt: Die Temperatur des Molekularfilters 18 wird erhöht. Der Druck wird durch die Verbindung mit dem Auslaß über das geöffnete Ventil 36 und den Druckabfall an der Drossel 32 verringert. Die Desorption und damit die Regeneration des Molekularfilters 18 kann dadurch in einer im ergleich zu der Zeit des normalen Betriebs kurzen Zeit erfolgen. Auch hier wird der Effekt verbessert und der Übergang beschleunigt, indem das dem Molekularfilter -jetzt über Rohr 72- zuströmende Gas durch das -jetzt über Rohr 74-abströmende Gas vorgewärmt wird. Es hat sich gezeigt, daß die in dem Speicherbehälter 30 gespeicherte Gasmenge für die Regeneration des Molekularfilters 18 ausreicht.

**Patentansprüche**

1. Vorrichtung zum Kühlen eines Detektors (24), insbesondere bei einem optischen Sucher, mittels des Joule-Thomson-Effektes durch Expansion von unter Druck stehendem Gas, bei welchem

    (a) ein Kompressor (10) zum Ansaugen und Komprimieren des Gases in einer zu dem Detektor (24) führenden Druckgasleitung (16) angeordnet ist,

    (b) mit der Druckgasleitung (16) eine den Joule-Thomson-Effekt ausnutzende Kühlvorrichtung (22) für den Detektor (24) mit einer Entspannungsdüse und einem Wärmetauscher verbunden ist, in welchem das Druckgas aus der Druckgasleitung im Gegenstrom von dem entspannten Gas vorgekühlt wird, und

    (c) dem Kompressor (10) ein Molekularfilter (18) zum Adsorbieren von störenden Bestandteilen des Gases nachgeschaltet ist,

    (d) zwischen Molekularfilter (18) und Kühlvorrichtung (22) ein erstes gesteuertes Ventil (20) angeordnet ist,

    (e) mit der Druckgasleitung (16) stromab von dem Molekularfilter (18) und stromauf von dem ersten gesteuerten Ventil (20) ein Speicherbehälter (30) verbunden ist,

    (f) die Druckgasleitung (16) zwischen Kompressor (10) und Molekularfilter (18) über ein zweites gesteuertes Ventil (36) mit einem Auslass verbindbar ist,

    (g) temperatursteuernde Mittel (38) zur Veränderung der Temperatur des Molekularfilters (18) zwischen einem relativ niedrigen und einem relativ hohen Wert vorgesehen sind,

    (h) eine Steuervorrichtung vorgesehen ist, durch welche

      - in einem ersten Zustand das erste gesteuerte Ventil (20) auf- und das zweite gesteuerte Ventil (36) zusteuerbar ist und die temperatursteuernden Mittel (38) auf die relativ niedrige Temperatur umschaltbar sind und

      - in einem zweiten Zustand das erste gesteuerte Ventil (20) zu- und das zweite gesteuerte Ventil (36) aufsteuerbar ist und die temperatursteuernden Mittel (38) auf die relativ hohe Temperatur umschaltbar sind, und

    (i) die Steuervorrichtung (42) normalerweise in dem ersten Zustand ist und in Zeitabständen in den zweiten Zustand schaltet.

2. Vorrichtung nach Anspruch 1, **dadurch gekennzeichnet, dass** die temperatursteuernden Mittel Peltier-Elemente (38) sind, die zwischen dem Molekularfilter (18) und einem Wärmespeicher (40) angeordnet und in dem ersten Zustand im Sinne einer Kühlung des Molekularfilters (18) ansteuerbar sind.

3. Vorrichtung nach Anspruch 2, **dadurch gekennzeichnet, dass** die Peltier-Elemente (38) in dem zweiten Zustand im Sinne einer Heizung des Molekularfilters (18) ansteuerbar sind.

4. Vorrichtung nach Anspruch 2 oder 3, **dadurch gekennzeichnet, dass** der Wärmespeicher (40) von dem Gehäuse des Kompressors (10) und/oder eines Antriebsmotors (12) für den Kompressor (10) gebildet ist.

5. Vorrichtung nach einem der Ansprüche 2 bis 4, **gekennzeichnet durch** einen Gegenstrom-Wärmetauscher (70), in welchem das dem Molekularfilter (18) zuströmende Gas mit dem aus dem Molekularfilter (18) abströmenden Gas in Wärmeaustausch steht.

6. Vorrichtung nach Anspruch 5, **dadurch gekennzeichnet, dass** der Gegenstrom-Wärmetauscher (70) Rohre (72, 74) für zu- und abströmendes Gas in engem wärmeleitenden Kontakt aufweist, die zusammen schraubenförmig gewendelt sind.

7. Vorrichtung nach Anspruch 6, **dadurch gekennzeichnet, dass** die schraubenförmig gewendelten Rohre (72, 74) des Gegenstrom-Wärmetauschers (70) in axialer Richtung federnd ausgebildet sind.

8. Vorrichtung nach einem der Ansprüche 2 bis 7, dadurch gekennzeichnet, daß das Molekularfilter (18) nur über die Peltier-Elemente (38) auf dem Wärmespeicher (40) abgestützt ist.

9. Vorrichtung nach einem der Ansprüche 1 bis 8, dadurch gekennzeichnet, daß

(a) an dem Molekularfilter (18) ein Temperaturfühler (76) angebracht ist, welcher ein Temperatursignal auf die Steuervorrichtung (42) aufschaltet, und

(b) die Steuervorrichtung (42) einen Regler enthält, durch welchen die Temperatur des Molekularfilters (18) mittels der temperatursteuernden Mittel (38) in dem ersten Zustand auf die relativ niedrige Temperatur und in dem zweiten Zustand auf die relativ hohe Temperatur regelbar ist.

10. Vorrichtung nach einem der Ansprüche 1 bis 9, dadurch gekennzeichnet, daß das Molekularfilter (18) außerhalb des Bereichs der temperatursteuernden Mittel (38) von einem wärmeisolierenden Mantel (64) umgeben ist.

11. Vorrichtung nach einem der Ansprüche 1 bis 10, dadurch gekennzeichnet, daß zwischen dem Speicherbehälter (30) und der Druckgasleitung (16) eine Drossel (32) angeordnet ist.

**Claims**

1. Apparatus for cooling a detector (24), in particular a detector for an optical seeker, by means of the Joule-Thomson effect resulting from the expansion of a compressed gas, in which

(a) a compressor (10) for sucking-in and compressing the gas is arranged in a high pressure pipeline (16) leading to the detector (24),

(b) a cooling device (22) utilising the Joule-Thomson effect for the detector (24) is coupled to the high pressure pipeline (16), and incorporates an expansion nozzle and a heat-exchanger in which the compressed gas from the high pressure pipeline is precooled by an oppositely directed stream of expanded gas,

(c) a molecular filter (18) for adsorbing troublesome components of the gas is coupled to the output of the compressor (10),

(d) a first controllable valve (20) is arranged between the molecular filter (18) and the cooling device (22),

(e) a storage vessel (30) is coupled to the high pressure pipeline (16), downstream from the molecular filter (18) and upstream from the first controllable valve (20),

(f) the high pressure pipeline (16) at a point between the compressor (10) and the molecular filter (18) is connectable via a second controllable valve (36) to an outlet,

(g) temperature controlling means (38) are provided for adjusting the temperature of the molecular filter (18) between a relatively low and a relatively high value,

(h) a control device is provided by means of which

- in a first state, the first controllable valve (20) is arranged to be opened, the second controllable valve (36) is arranged to be closed and the temperature controlling means (38) are set to the relatively low temperature and

- in a second state, the first controllable valve (20) is arranged to be closed, the second controllable valve (36) is arranged to be opened and the temperature controlling means (38) are set to the relatively high temperature, and

(i) the control device (42) is normally in the first state but is periodically switched to the second state.

2. Apparatus according to claim 1, characterised in that the temperature controlling means are Peltier elements (38) arranged between the molecular filter (18) and a heat storage device (40) and, in the first state, are controlled such as to produce a cooling of the molecular filter (18).

3. Apparatus according to claim 2, characterised in that in the second state, the Peltier elements (38) are controlled such as to produce a heating of the molecular filter (18).

4. Apparatus according to claim 2 or claim 3, characterised in that the heat storage device (40) is formed by the housing of the compressor (10) and/or of a drive motor (12) for the compressor.

5. Apparatus according to any one of claims 2 to 4, characterised by a counter-flow heat exchanger (70) in which the gas flowing into the molecular filter (18) is in a heat-exchanging relationship with the gas flowing out of the molecular filter (18).

6. Apparatus according to claim 5, characterised in that the counter-flow heat exchanger (70) comprises tubes (72, 74) for the inflowing and outflowing gases which are in close heat-conducting contact and are coiled together in the form of a screw-thread.

7. Apparatus according to claim 6, characterised in that the screw-thread-like coiled tubes (72, 74) of the counter-flow heat exchanger (70) are formed as a spring in the axial direction.

8. Apparatus according to any one of claims 2 to 7, characterised in that the molecular filter (18) is supported only by the Peltier elements (38) on the heat storage device (40).

9. Apparatus according to any one of claims 1 to 8, characterised in that
   (a) a temperature sensor (76) is mounted on the molecular filter (18) for supplying a temperature-indicating signal to the control device (42), and
   (b) the control device (42) contains a control means for adjusting the temperature of the molecular filter (18) by means of the temperature controlling means (38) such that in the first state it is set to the relatively low temperature and in the second state it is set to the relatively high temperature.

10. Apparatus according to any one of claims 1 to 9, characterised in that, in the region located away from the temperature controlling means (38), the molecular filter (18) is surrounded by a heatinsulating jacket (64).

11. Apparatus according to any one of claims 1 to 10, characterised in that, a restricting nozzle (32) is arranged between the storage vessel (30) and the high pressure pipeline (16).

**Revendications**

1. Dispositif destiné à refroidir un détecteur (24), en particulier dans un chercheur optique, au moyen de l'effet Joule-Thomson par expansion de gaz sous pression, dans lequel
   (a) un compresseur (10) destiné à aspirer et à comprimer le gaz est disposé dans une conduite de gaz comprimé (16) menant au détecteur (24),
   (b) un dispositif de refroidissement (22) pour le détecteur (22), qui utilise l'effet Joule Thomson et comprend une tuyère de détente et un échangeur de chaleur, est relié à la conduite de gaz comprimé (16), dans l'échangeur de chaleur le gaz comprimé de la conduite de gaz comprimé étant préréfrigéré dans le contre-courant par le gaz détendu, et
   (c) un filtre moléculaire (18) destiné à adsorber des composantes perturbantes du gaz est intercalé en arrière du compresseur (10),
   (d) une première soupape commandée (20) est disposée entre le filtre moléculaire (18) et le dispositif de refroidissement,
   (e) un récipient accumulateur (30) est relié à la conduite de gaz comprimé (16) en aval du filtre moléculaire (18) et en amont de la première soupape commandée (20),
   (f) la conduite de gaz comprimé (16) entre le compresseur (10) et le filtre moléculaire (18) est reliable par une seconde soupape commandée (36) à une sortie,
   (g) des moyens commandés par la température (38) destinés à la variation de la température du filtre moléculaire (18) entre une valeur relativement basse et une valeur relativement élevée sont prévus,
   (h) un dispositif de commande est prévu, par lequel
      - dans un premier état, la première soupape commandée (20) est commandable de sorte à être conductive et la seconde soupape commandée (36) est commandable de sorte à être non-conductive, et les moyens commandant la température (38) sont renversables à la température relativement basse, et

- dans un second état, la première soupape commandée (20) est commandable de sorte à être nonconductive et la seconde soupape commandée (36) est commandable de sorte à être conductive, et les moyens commandant la température (38) sont renversables à la température relativement élevée, et

(i) le dispositif de commande (42) est normalement dans le premier état et commute dans des intervalles dans le second état.

2. Dispositif selon la revendication 1, **caractérisé par le fait que** les moyens commandant la température sont des éléments Peltier (38) disposés entre le filtre moléculaire (18) et un accumulateur thermique (40) et commandables dans le premier état dans le sens d'un refroidissement du filtre moléculaire (18).

3. Dispositif selon la revendication 2, **caractérisé par le fait que** les éléments Peltier (38) sont commandables dans le second état dans le sens d'un échauffement du filtre moléculaire (18).

4. Dispositif selon la revendication 2 ou 3, **caractérisé par le fait que** l'accumulateur thermique (40) est formé par le boîtier du compresseur (10) et/ou d'un moteur d'entraînement (12) pour le compresseur (10).

5. Dispositif selon l'une des revendications 2 à 4, **caractérisé par** un échangeur de chaleur à contre-courant (70) dans lequel le gaz s'écoutant vers le filtre moléculaire (18) est en échange de chaleur avec le gaz partant.

6. Dispositif selon la revendication 5, **caractérisé par le fait que** l'échangeur de chaleur à contre-courant (70) a des tuyaux (72, 74) pour le gaz affluant et sortant en contact conducteur de chaleur étroit, les tuyaux étant tordus ensemble en hélice.

7. Dispositif selon la revendication 6, **caractérisé par le fait que** les tuyaux tordus en hélice (72, 74) de l'échangeur de chaleur à contre-courant (70) sont formés de manière élastique dans la direction axiale.

8. Dispositif selon l'une des revendications 2 à 7, **caractérisé par le fait que** le filtre moléculaire (18) n'est supporté par l'accumulateur thermique (40) que par les éléments Peltier (38).

9. Dispositif selon l'une des revendications 1 à 8, **caractérisé par le fait que**

(a) un détecteur de la température (76) est monté sur le filtre moléculaire (18) et applique un signal de température au dispositif de commande (42), et

(b) le diSpositif de commande (42) comprend un régulateur par lequel la température du filtre moléculaire (18) est réglable au moyen des moyens commandant la température (38) dans le premier état à température relativement basse, et dans le second état à température relativement élevée.

10. Dispositif selon une des revendications 1 à 9, **caractérisé par le fait que** le filtre moléculaire (18) est entouré d'une chemise calorifuge à l'extérieur du domaine des moyens commandant la température (38).

11. Dispositif selon l'une des revendications 1 à 10, **caractérisé par le fait qu'**un étrangleur (32) est disposé entre le récipient accumulateur (30) et ta conduite de gaz comprimé (16).

Fig.1

*Fig.2*

Fig. 3

Fig. 4